# FASCICULE DE BREVET EUROPEEN

(11) **EP 0 457 668 B1**
(45) Date de publication et mention de la délivrance du brevet: **07.12.1994**
(21) Numéro de dépôt: 91401239.8
(22) Date de dépôt: 14.05.1991
(51) Int. Cl.: G01C 19/72

(54) **Dispositif de mesure à fibre optique, gyromètre, centrale de stabilisation et capteur de courant ou de champ magnétique**
Fiberoptische Messeinrichtung, Gyroskop, Stabilisierungssystem und Strom- oder Magnetfeldsensor
Fibre optic measuring device and gyroscope system for stabilisation, sensor for current or magnetic field

(30) Priorité: 18.05.1990 FR 9006253
(43) Date de publication de la demande: 21.11.1991
(73) Titulaire: PHOTONETICS S.A., 78160 Marly le Roi (FR)
(72) Inventeur: Lefevre, Hervé, F-75013 Paris (FR); Martin, Philippe, F-78190 Pontchartrain (FR); Simonpietri, Pascal, F-95350 Saint Brice Sous Foret (FR)
(74) Mandataire: Phélip, Bruno

(56) Documents cités:
- EP-A- 0 007 826
- DE-A- 3 115 804
- FR-A- 2 526 938
- US-A- 4 556 293
- ELECTRONICS LETTERS, vol. 22, no. 10, mai 1986, pages 546-547; S. TAI et al: "All-fibre gyroscope using depolarised superluminescent diode"
- ISA TRANSACTIONS, vol. 28, no. 2, 1989, pages 41-49; C.M. FERRAR: "Progress in fiber optic gyro development"

## Description

L'invention concerne un dispositif de mesure à fibre optique permettant de mesurer la variation d'un paramètre qui produit des perturbations non réciproques dans un interféromètre en anneau de SAGNAC.

L'interféromètre de SAGNAC et les phénomènes physiques qu'il met en jeu sont bien connus. Dans un tel interféromètre, une lame séparatrice ou autre dispositif séparateur divise une onde incidente. Les deux ondes contra-propagatives ainsi créées se propagent en sens opposés le long d'un chemin optique fermé, se recombinent et produisent des interférences qui dépendent du déphasage des ondes lors de leur recombinaison.

A l'origine, le chemin optique fermé des interféromètres de SAGNAC était défini par des miroirs. Il est maintenant connu qu'il peut être constitué par une bobine multi-tour de fibre optique monomode.

Il est également connu que certains phénomènes physiques sont susceptibles de produire des perturbations, particulièrement des déphasages, non-réciproques, sur les ondes contra-propagatives engendrant un déphasage relatif de ces ondes qui modifient leur état d'interférence lors de leur recombinaison.

La mesure de ce déphasage relatif permet de quantifier le phénomène qui l'a engendré.

Le principal phénomène physique susceptible de créer ces perturbations non réciproques est l'effet SAGNAC produit par la rotation de l'interféromètre par rapport à un axe perpendiculaire au plan de son chemin optique fermé. L'effet FARADAY ou effet magnéto-optique colinéaire est également connu comme produisant des effets non réciproques de ce type ; cela a par exemple été décrit dans un article de la revue OPTIC LETTERS (Vol. 7, n° 4, Avril 1982, pages 180-182) par K. BOHM. D'autres effets peuvent, dans certaines conditions produire également un déphasage non réciproque.

Au contraire, les variations de nombreux paramètres représentatifs de l'environnement qui sont souvent à l'origine des perturbations des mesures n'ont que des effets réciproques sur l'interféromètre de SAGNAC, ne perturbent pas le déphasage relatif entre les ondes contra-propagatives et n'ont donc pas d'influence sur la mesure du paramètre étudié. Tel est le cas des variations lentes de température, d'indices, etc... qui modifient le chemin optique parcouru par les ondes, mais le modifient de manière réciproque.

De nombreux travaux ont été menés afin d'améliorer la sensibilité et la précision des mesures pouvant être réalisées avec un tel appareil de mesure. On pourra par exemple consulter sur ce sujet le Chapitre 9 intitulé "Fiber Optic Gyroscope" de Hervé C. LEFEVRE dans l'ouvrage "OPTICAL FIBER SENSORS" Vol. 2 -ARTECH HOUSE- 1989.

En particulier, il a tout d'abord été constaté que la réponse fournie par l'interféromètre de SAGNAC est de la forme P = Po(1 + cos δΦ) et donc que la sensibilité de ce signal au voisinage de la différence de phase δΦ = 0 est faible. Il a été proposé d'introduire une modulation de différence de phase, carrée d'amplitude de plus ou moins π/2 par exemple, pour réaliser la mise au biais, c'est-à-dire déplacer le point de fonctionnement et produire un signal périodique dont l'amplitude est une fonction sinusoïdale du paramètre mesuré et que l'on peut donc exploiter avec une plus grande sensibilité et stabilité.

Il a ensuite été montré que la précision de la mesure est améliorée par l'utilisation d'une méthode de zéro également appelée fonctionnement en boucle fermée. Selon cette méthode, une différence de phase supplémentaire dite de contre-réaction δΦ_{cr} est appliquée et sert à compenser la différence de phase δΦₚ produit par le paramètre mesuré. La somme de ces deux différences de phase δΦ_{cr} et δΦₚ, est maintenue nulle, ce qui permet de faire fonctionner l'interféromètre avec la précision maximum. La mesure est réalisée par l'exploitation du signal nécessaire à la production de la différence de phase de contre-réaction δΦ_{cr}. Ainsi, la mesure est stable et linéaire.

L'asservissement nécessaire à ce fonctionnement en boucle fermée peut être réalisé par un décalage de fréquence. Ce décalage peut être généré directement à partir de modulateurs acousto-optiques ou bien simulé en appliquant une modulation serrodyne sur un modulateur de phase. Une telle modulation serrodyne est effectuée en appliquant une rampe de modulation de phase en dent de scie. Il est connu aussi qu'une rampe continue peut être remplacée par des marches synchronisées sur une horloge et qu'un tel signal peut être généré à partir d'un circuit logique et d'un convertisseur numérique-analogique.

Dans les réalisations pratiques, des difficultés ont été rencontrées provenant de ce que la fibre optique constituant l'anneau de l'interféromètre n'est pas parfaite et présente une certaine biréfringence. Cette biréfringence produit la propagation de deux modes orthogonaux de polarisation à des vitesses différentes. Il est connu que des phénomènes de couplage de modes se produisent alors qui engendrent des phénomènes non réciproques susceptibles de perturber la mesure.

Il est connu que ces phénomènes parasites peuvent être réduits en utilisant un polariseur sur la porte d'entrée-sortie commune de l'interféromètre. La réjection du polariseur n'étant pas infinie, il est aussi connu que ces effets peuvent être limités en utilisant une fibre fortement biréfringente à conservation de polarisation et une source à spectre large. Les ondes parasites couplées dans la polarisation orthogonale, perdent leur cohérence avec l'onde principale à cause de la différence de vitesse liée à la biréfringence, ce qui réduit le signal parasite effectif lié aux défauts de conservation de polarisation de la fibre.

Cependant, il a été montré, [voir en particulier l'article "PROGRESS IN OPTICAL FIBER GYROSCOPES USING INTEGRATED OPTICS" par H.C. LEFEVRE et al., dans Proceedings AGARD/NATO, volume CPP-383, pages 9A/1-13, (1985)] qu'il reste un signal parasite s' il y a des points de couplage parasites symétriques par rapport à la bobine, c'est-à-dire à la même distance optique du séparateur. Ceci est le cas en particulier, pour les défauts du séparateur qui divise et recombine les ondes contra-propagatives. En effet, celui-ci étant par principe placé à l'extrémité de la bobine, il génère des couplages symétriques.

On a par ailleurs proposé (FR-A-2 526 938) d'utiliser une fibre à polarisation unique pour la réalisation de la bobine de l'interféromètre. L'onde incidente, polarisée linéairement est décomposée par un cube séparateur qui produit les deux ondes contra-propagatives.

Ces ondes, superposées après circulation dans la boucle, sont extraites, déphasées l'une par rapport à l'autre de π/₂ par une lame λ /₄ pour effectuer la mise au biais, puis recombinées. La mesure de leur déphasage permet d'accéder à la valeur de la rotation (ou du paramètre mesuré).

Dans cette disposition le déphasage de π/₂ introduit par la lame λ /₄ ne peut être parfaitement stable, en particulier à cause de la variation de la biréfringence avec la température. Cela introduit une source de dérive ou source d'erreur dans la mesure.

Par ailleurs, il est également connu, par exemple de US-4.556.293 qu'une source de lumière dépolarisée, utilisable dans certains gyroscopes, peut être obtenue en couplant une fibre biréfringente d'une source large, par exemple une diode luminescente.

L'invention a pour but la réalisation d'un dispositif qui évite les signaux parasites produits par des couplages symétriques, tout en évitant les inconvénients susceptibles d'être produits par l'introduction d'une lame λ /₄.

A cet effet, il est proposé un dispositif de mesure à fibre optique comportant une source lumineuse polarisée linéairement, un interféromètre en anneau de SAGNAC dans lequel se propagent deux ondes contra-propagatives, un détecteur, des moyens électroniques comportant un système de traitement fournissant un signal fonction du paramètre mesuré, des moyens de modulation de la différence de phase séparant les ondes contra-propagatives.

L'onde incidente provenant de la source est répartie également sur les 2 modes de polarisation d'un séparateur de polarisation afin de séparer spatialement les 2 polarisations qui vont se propager dans l'interféromètre. L'interféromètre comporte une fibre biréfringente à conservation de polarisation ayant deux extrémités ayant des axes neutres de biréfringence, chacune des extrémités de la fibre à conservation de polarisation étant reliée à l'une des portes du séparateur de polarisation, les axes de chaque extrémité étant en coïncidence avec ceux de la porte associée afin de coupler à chaque extrémité la lumière dans le même mode de polarisation de la fibre biréfringente.

Selon l'invention, le dispositif comporte les caractéristiques de la partie caractérisante de la revendication 1.

De préférence, le séparateur de polarisation est un séparateur de polarisation tout-fibre.

L'invention sera décrite plus en détail en référence aux dessins annexés, dans lesquels :
- La figure 1 est un schéma représentatif du dispositif de l'invention dans un premier mode de réalisation.
- La figure 2 représente les états de polarisation de la lumière après les différents composants dans le mode de réalisation représenté à la figure 1.
- La figure 3 est un schéma représentatif du dispositif de l'invention dans un deuxième mode de réalisation.
- La figure 4 est une représentation du séparateur de polarisation à fibre optique susceptible d'être utilisé pour la mise en oeuvre de l'invention.

Le dispositif de mesure à fibre optique comporte une source lumineuse 1 à spectre large, un interféromètre en anneau de SAGNAC 2, un récepteur 3 et un modulateur de biréfringence 4. Un séparateur de polarisation 5, dit séparateur d'entrée, permet d'extraire le signal sortant de l'interféromètre 2 pour le diriger vers le détecteur 3.

Un deuxième séparateur de polarisation 6, dit séparateur de boucle, permet de séparer spatialement les ondes incidentes rapide et lente en deux ondes contra-propagatives qui parcourent l'anneau 7 de l'interféromètre 2 en sens inverse.

Le séparateur semi-transparent des ondes contra-propagatives généralement présent dans les dispositifs de l'art antérieur, n'existe pas ici. L'onde d'entrée polarisée est envoyée dans un milieu de propagation biréfringent de façon à équilibrer la puissance moitié-moitié sur le mode rapide et le mode lent de ce milieu : un séparateur de polarisation est placé en série. Il sépare spatialement le mode rapide et le mode lent, les 2 portes de sortie du séparateur de polarisation sont connectées aux extrémités de la bobine de fibre. Cette bobine est de préférence une bobine de fibre à conservation de polarisation et ses extrémités sont orientées de façon à optimiser le couplage du même mode de polarisation de la fibre aux deux portes de sortie du séparateur de polarisation.

La séparation effective des ondes contra-propagatives a lieu en fait à l'entrée du milieu biréfringent. Les défauts de conservation de polarisation, au niveau du séparateur de polarisation qui divise spatialement les ondes contra-propagatives, ne sont donc plus symétriques par rapport au point de séparation effectif. En effet, le chemin du mode lent du milieu biréfringent est plus long que celui du mode rapide. L'invention permet donc de supprimer le problème lié habituellement à la conservation de polarisation du séparateur semi-transparent du faisceau.

Le séparateur de polarisation peut être réalisé en optique classique (cube séparateur de polarisation, prisme de Wollaston par exemple) ou bien en optique guidée monomode. L'article intitulé "HIGH SELECTIVITY POLARIZATION SPLITTING FIBER COUPLER" par H.C. LEFEVRE et al., Proceedings SPIE, volume 988, 63-69, (1988), décrit en particulier un séparateur de polarisation tout-fibre qui est bien adapté à l'invention.

De plus, dans un mode de réalisation préféré, le modulateur de phase placé habituellement sur la bobine est supprimé évitant ainsi les discontinuités. Il est remplacé par un modulateur de biréfringence placé avant le séparateur de polarisation. Ces modulateurs de biréfringence possèdent déjà une biréfringence intrinsèque et peuvent donc remplir aussi le rôle de milieu de propagation biréfringent placé avant le séparateur de polarisation. De préférence, ce modulateur est un composant optique intégré par exemple sur substrat électro-optique.

Le modulateur de biréfringence 4 est traversé par les deux ondes contra-propagatives après leur séparation à l'aller et avant leur recombinaison au retour. La différence de marche permanente introduite par cet élément biréfringent due à sa biréfringence intrinséque est, supérieure à la longueur de cohérence de la source, de préférence supérieure à plusieurs fois cette longueur de cohérence.

Les ondes contra-propagatives sont polarisées linéairement dans le même mode de polarisation de la bobine de fibre.

Pour maintenir cet état de polarisation, la boucle 7 est constituée d'une fibre à maintien de polarisation. Comme leur nom l'indique, de telles fibres assurent la transmission d'un faisceau de lumière polarisée en conservant son état de polarisation. Elles sont, par principe, fortement biréfringentes. Cette biréfringence est généralement créée par contrainte avec une structure spécifique de la gaine (structure à gaine elliptique, structure "PANDA", structure "bow-tie")... Elles sont représentées, à leur entrée comme à leur sortie, par des axes neutres de biréfringence indiquant les directions respectives de leur axe rapide et de leur axe lent.

Le séparateur de boucle 6 est un séparateur de polarisation. Un tel séparateur comporte une porte d'entrée commune a et deux portes de sortie séparées b, c. Chacune de ces portes est représentée par ses axes neutres de polarisation.

Un faisceau de lumière incident, entrant par la porte a, est séparé en deux faisceaux sortant, le faisceau sortant par la porte b étant polarisé linéairement parallèlement à l'un des axes de la porte a, par exemple l'axe vertical, alors que l'autre, sortant par la porte c, est polarisé linéairement parallèlement à l'autre axe de la porte a, par exemple son axe horizontal

Un séparateur de polarisation de ce type peut constituer un composant discret, par exemple un cube polarisant ou un prisme de Wollaston. Il peut également être constitué d'un coupleur tout-fibre à séparation de polarisation, comme celui décrit dans l'article "HIGH SELECTIVITY POLARIZATION SPLITTING FIBER COUPLER" par H.C. LEFEVRE et al., Proceedings SPIE, Volume 988, 63-69, (1988).

Le séparateur de polarisation tout fibre est réalisé par polissage latéral de deux éléments de fibre fortement biréfringente dans une direction respectivement parallèle ou perpendiculaire à l'axe rapide de propagation. Ces deux fibres, supportées dans des rainures formées dans des blocs de silice et étant soumises à des courbures prédéterminées, sont associées. Il est ainsi possible de réaliser un coupleur à fibre à séparation de polarisation ayant les propriétés indiquées plus haut. Le rapport des puissances transmises à l'un ou l'autre des interfaces peut être contrôlé.

Le séparateur d'entrée 5 peut avantageusement être de même nature que le séparateur de boucle 6.

Le modulateur 4 est un modulateur de biréfringence, c'est avantageusement un composant optique intégré. Ce composant est un modulateur phase, dont la technologie est connue peut en particulier être réalisé avec un guide droit fabriqué sur un substrat de Niobate de Lithium dans l'orientation coupe X - propagation Y avec des électrodes placées de chaque côté du guide, la tension électrique appliquée modifie la phase de l'onde se propageant dans le modulateur. Cette modification est différente selon la direction de la polarisation. Une tension électrique de modulation introduit ainsi une modulation de la différence de phase entre les modes de polarisation et donc une modulation de la biréfringence.

Le signal électrique produit par le détecteur 3 est fourni à un système de traitement 8 qui, d'une part, fournit la valeur du paramètre mesuré pour tout usage voulu et, d'autre part, alimente des moyens électroniques 9 qui commandent le modulateur 4.

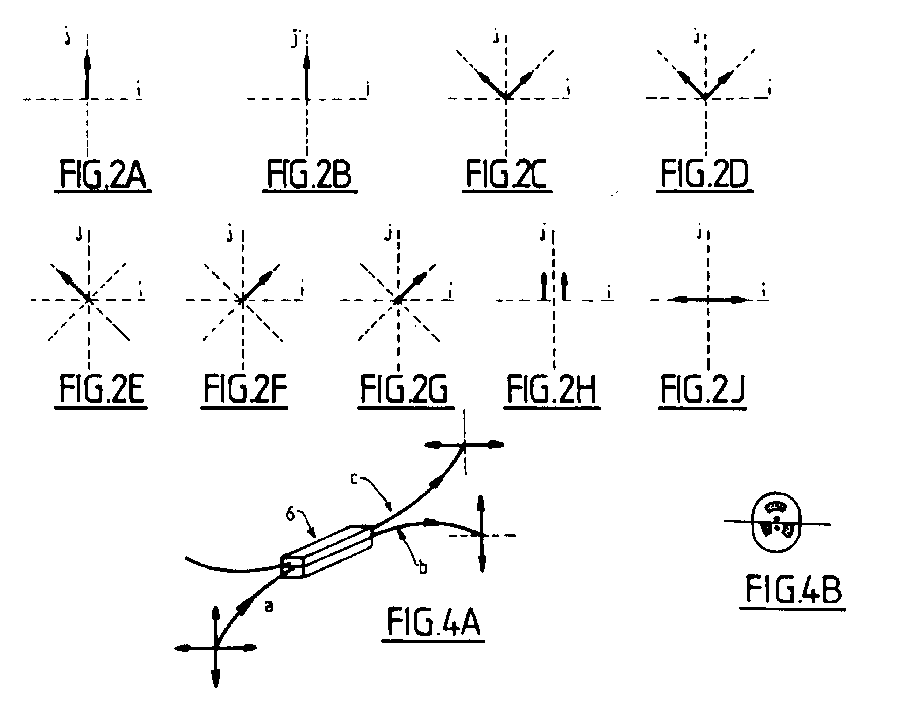

On expliquera maintenant les différents états de polarisation du faisceau lumineux, au cours de sa propagation dans le dispositif de mesure, en référence à la figure 2.

La source lumineuse 1 émet un faisceau fortement polarisé, faiblement cohérent temporellement. Il s'agit par exemple d'une diode super-luminescente à spectre large. Son état de polarisation est représenté en figure 2A.

L'un des axes neutres de l'entrée du séparateur 5 est parallèle à la direction de polarisation de la source (figure 2B), il réduit en sortie 5C la composante résiduelle de lumière polarisée perpendiculaire à la direction de polarisation du flux principal, émis par la source 1.

Les axes de polarisation du modulateur de phase 4 sont orientés à 45° (figure 2C) de ceux de la sortie 5C du séparateur 5. Si le dispositif est réalisé avec des composants discrets, ces composants sont effectivement orientés les uns par rapport aux autres. Dans le cas d'une réalisation "tout fibre", le séparateur 5 et le modulateur de birefringence 4 sont reliés par une fibre à conservation de polarisation dont les axes sont soumis à une rotation de 45° (à 2π près) entre ces deux éléments. La fonctionnalité importante est de répartir également l'onde incidente sur les 2 modes de polarisation du modulateur de biréfringence; ceci peut s'effectuer par une rotation des axes du modulateur, comme indiqué plus haut mais aussi avec une lame biréfringente, demi-onde ou quart d'onde par exemple.

Les axes de polarisation de la porte d'entrée 6a du séparateur de boucle (figure 2d) sont parallèles à ceux du modulateur de birefringence 4. Ce séparateur divise spatialement les deux polarisations d'entrée. La polarisation sortant par la porte 6b est couplée dans un des 2 modes (par exemple le mode 1) de l'une des extrémités de la bobine de fibre (figure 2E). La polarisation sortant par la porte 6C est couplée dans le même mode (par exemple le mode 1) mais à l'autre extrémité de la bobine de fibre (figure 2F). Ceci nécessite donc une rotation relative de 90° des axes neutres de la fibre entre les deux extrémités pour utiliser le même mode de polarisation dans les 2 sens de la fibre.

Après propagation dans le même mode, le long de la bobine 7, les deux ondes contra-propagatives reviennent et repassent en sens inverse dans le séparateur 6 et le modulateur de biréfringence 4 (figure 2G). La polarisation qui était dans le mode rapide à l'aller est dans le mode lent au retour et réciproquement. Ces deux polarisations sont orthogonales, mais elles repassent aussi à travers le séparateur de polarisation 5, et aux portes 5a (figure 2H) et 5 d (figure 2J) les 2 ondes ont de nouveau la même polarisation et peuvent donc interférer.

Ainsi, la lumière polarisée émise par la source 1 est filtrée par le séparateur d'entrée 5 puis décomposée en deux modes polarisés perpendiculairement de même intensité par le modulateur 4. Ce modulateur de biréfringence 4 introduit une différence de phase δΦ entre ses deux modes. δΦ est fonction du signal reçu par le modulateur 4 à partir des moyens électroniques 9. Le séparateur de boucle 6 sépare ces deux modes, en adressant chacun d'eux sur l'une des extrémités de la bobine de fibre 7 et assurant leur rotation en sens inverse à l'intérieur de l'anneau. Compte tenu de la rotation de 90° des axes de polarisation de la fibre constitutive de l'anneau 7, ces deux ondes sont réunies par le séparateur de boucle 6 et ressortent par la porte a. Au cours de leur propagation dans l'anneau 7, elles ont subi un déphasage complémentaire δΦₚ dû au paramètre mesuré.

Les deux ondes traversent alors, en retour, le modulateur de biréfringence 4 puis étant chacune orientées à 45° par rapport aux axes du séparateur d'entrée 5, chacune d'elles est décomposée en deux modes, l'un étant transmis vers la source 1 alors que l'autre est adressé vers le récepteur 3. Le récepteur 3 fournit donc un signal fonction de l'état d'interférence des deux ondes et donc de leur déphasage. Le signal électrique produit par le récepteur 3 est adressé au système de traitement 8 qui, d'une part, assure l'extraction du paramètre P pour tout usage jugé utile et, d'autre part, produit un signal au moyen électronique 9 de manière à commander le modulateur de phase 4.

Le traitement du signal réalisé par le système de traitement 8 est du type de celui habituellement utilisé dans ces dispositifs. Il comporte l'élaboration d'un signal de modulation de biais permettant de linéariser la dépendance entre le signal reçu par le récepteur 3 et le déphasage entre les ondes contra-propagatives au voisinage du zéro, un signal de contre-réaction maintenant ce déphasage au voisinage du zéro, par exemple en appliquant une modulation serrodyne.

Dans un deuxième mode de réalisation représenté à la figure 3, une lame semi-transparente 10 est interposée entre la source 1 et le séparateur 5 permettant d'orienter sur le récepteur 3 le signal d'interférence ressortant par la porte 5a. Cette lame semi-transparente 10 peut être remplacée par un coupleur 3dB tout-fibre. Les ondes sortant par la porte 5d du séparateur ne sont pas exploitées dans ce cas. Le séparateur de polarisation 5 peut alors être remplacé par un polariseur.

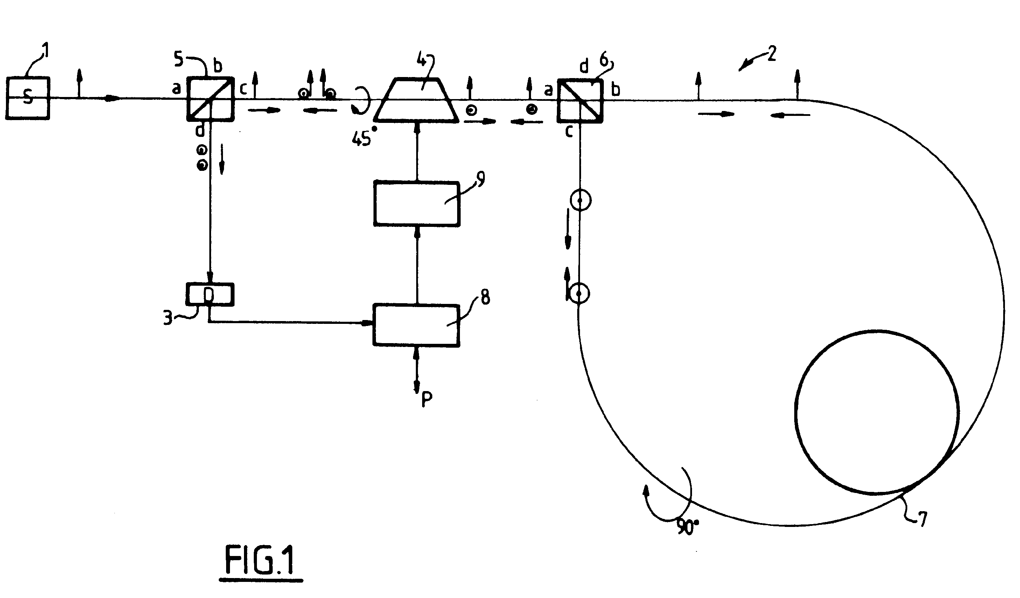

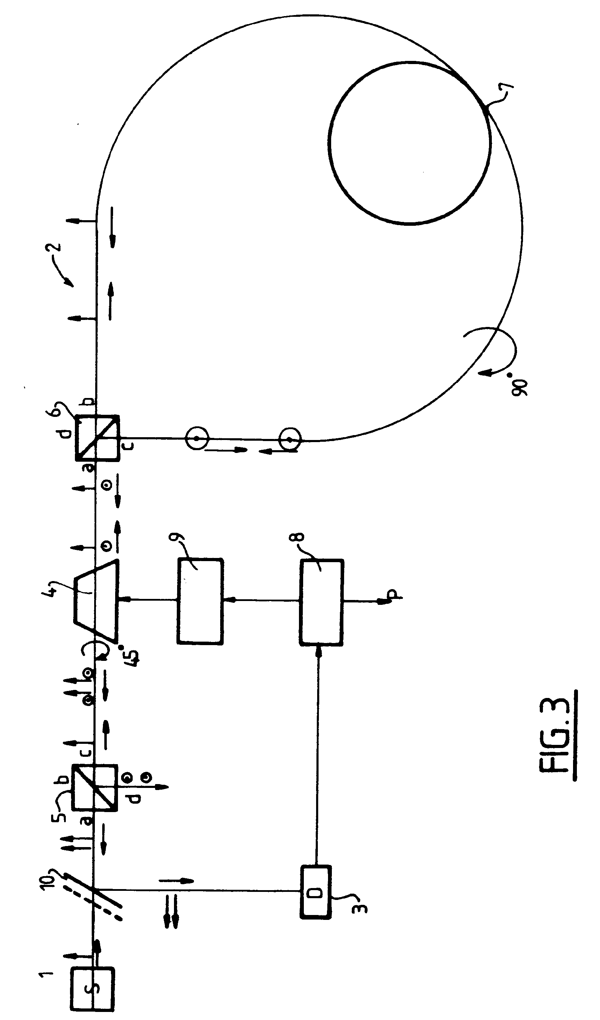

Dans ce deuxième mode de réalisation, comme dans le premier, décrit plus haut en référence à la figure 1, un même composant produit la séparation des ondes contra-propagatives puis leur combinaison après leur circulation dans la bobine ; ainsi les chemins parcourus par chacune des deux ondes sont identiques et les seuls effets non réciproques sont ceux produits dans la bobine.

## Revendications

1. Dispositif de mesure à fibre optique dans lequel la variation d'un paramètre mesuré engendre une différence de phase entre deux ondes comportant :
- une source lumineuse (1) de faible longueur de cohérence ;
- un interféromètre en anneau de Sagnac (2) dans lequel se propagent deux ondes contra-propagatives séparées par une différence de phase ;
- un détecteur (3),
- des moyens électroniques (8) comportant un système de traitement fournissant un signal fonction du paramètre mesuré ;
- des moyens de modulation de la différence de phase entre les ondes contra-propagatives ;
- un séparateur (6) de polarisation séparant spatialement les deux ondes polarisées qui vont se propager dans l'interféromètre (2) ;
- l'interféromètre (2) comportant une fibre (7) biréfringente à conservation de polarisation ayant deux extrémités ayant des axes neutres de biréfringence, chacune des extrémités de la fibre (7) à conservation de polarisation étant reliée à l'une des portes (6b) et (6c) du séparateur (6) de polarisation, les axes de chaque extrémité étant en coïncidence avec ceux de la porte associée afin de coupler à chaque extrémité la lumière dans le même mode de polarisation de la fibre biréfringente,
caractérisé en ce qu'il comporte un deuxième séparateur de polarisation (5) entre la source (1) et le moyen optique de séparation de polarisation (6) de l'anneau (7) de l'interféromètre (2), ce deuxième séparateur de polarisation (5) étant orienté de façon à ce que la lumière transmise provenant de la source se répartisse sur les deux modes de polarisation du séparateur (6), en ce que lesdits moyens de modulation de la différence de phase séparant les ondes contra-propagatives sont un modulateur de biréfringence (4) placé entre la source et le séparateur de polarisation (6), et en ce qu'il comporte un composant biréfringent, placé avant le séparateur de polarisation (6) et introduisant entre les deux ondes polarisées une différence de marche supérieure à la longueur de cohérence de la source (1).

2. Dispositif de mesure à fibre optique selon la revendication 1, caractérisé en ce que le séparateur de polarisation (6) est un cube polarisant.

3. Dispositif de mesure à fibre optique selon la revendication 1, caractérisé en ce que le séparateur de polarisation (6) est un prisme de Wollaston.

4. Dispositif de mesure à fibre optique selon la revendication 1, caractérisé en ce que le séparateur de polarisation (6) est un séparateur de polarisation tout-fibre.

5. Dispositif de mesure à fibre optique selon l'une quelconque des revendications 1 à 4, caractérisé en ce que la source lumineuse (1) est une diode super-luminescente à spectre large.

6. Dispositif de mesure à fibre optique selon l'une quelconque des revendications 1 à 5, caractérisé en ce que le deuxième séparateur de polarisation (5) est un composant tout-fibre.

7. Dispositif de mesure à fibre optique selon l'une quelconque des revendications 1 à 6, caractérisé en ce que le détecteur (3) reçoit une partie du flux lumineux sortant de l'interféromètre (2), par une porte 5-d du séparateur de polarisation (5) placé entre la source (1) et le séparateur de polarisation (6).

8. Dispositif de mesure à fibre optique selon l'une quelconque des revendications 1 à 7, caractérisé en ce qu'il comporte un séparateur de faisceau (10) placé entre la source (1) et le séparateur de polarisation (5), le détecteur (3) recevant une partie du flux sortant de l'interféromètre (2), par la porte 5-a de ce séparateur (5).

9. Dispositif de mesure à fibre optique selon l'une quelconque des revendications 1 à 8, caractérisé en ce que la fibre (7) à conservation de polarisation est une fibre à biréfringence de contrainte.

10. Dispositif de mesure à fibre optique selon l'une quelconque des revendications 1 à 9, caractérisé en ce que le modulateur de biréfringence (4) est un composant optique intégré.

11. Gyromètre caractérisé en ce qu'il est conforme au dispositif de mesure de l'une quelconque des revendications 1 à 10, le paramètre mesuré étant la vitesse de rotation de l'interféromètre autour de l'axe de la bobine.

## Patentansprüche

1. Faseroptische Meßvorrichtung, bei der die Veränderung eines gemessenen Parameters eine Phasendifferenz zwischen zwei Wellen erzeugt, mit:
- einer Lichtquelle (1) mit geringer Kohärenzlänge;
- einem Sagnac-Ringinterferometer (2), in dem sich zwei sich gegenläufig ausbreitende Wellen ausbreiten, die durch eine Phasendifferenz voneinander getrennt sind;
- einem Detektor (3);
- einer elektronischen Einrichtung (8) mit einem Verarbeitungssystem, das ein von dem gemessenen Parameter abhängiges Signal liefert;
- einer Einrichtung zur Modulation der Phasendifferenz zwischen den beiden sich gegenläufig ausbreitenden Wellen;
- einem Polarisationsseparator (6), der die beiden sich in das Interferometer (2) ausbreitenden polarisierten Wellen räumlich voneinander trennt;
- wobei das Interferometer (2) eine doppelbrechende Polarisationserhaltungs-Faser (7) aufweist, die zwei Enden mitneutralen Doppelbrechungsachsen aufweist, wobei jedes Ende der Polarisationserhaltungs-Faser (7) mit einem der Eingänge (6b) und (6c) des Polarisationsseparators (6) verbunden ist, und wobei die Achsen jedes Endes mit denjenigen des zugehörigen Eingangs koinzidieren, um an jedem Ende das Licht in demselben Polarisationsmodus der doppelbrechenden Faser zu koppeln,
dadurch gekennzeichnet, daß sie einen zwischen der Quelle (1) und der optischen Polarisationstrenneinrichtung (6) des Rings (7) des Interferometers (2) befindlichen zweiten Polarisationsseparator (5) aufweist, der derart orientiert ist, daß das von der Quelle kommende transmittierte Licht sich in die beiden Polarisationsmodi des Separators (6) aufteilt, daß die Einrichtung zur Modulation der die sich gegenläufig ausbreitenden Wellen trennenden Phasendifferenz ein zwischen der Quelle und dem Polarisationsseparator (6) angeordneter Doppelbrechungsmodulator (4) ist, und daß sie ein Doppelbrechungselement aufweist, das vor dem Polarisationsseparator (6) angeordnet ist und eine Stufendifferenz zwischen den beiden polarisierten Wellen erzeugt, die größer als die Kohärenzlänge der Quelle (1) ist.

2. Faseroptische Meßvorrichtung nach Anspruch 1, dadurch gekennzeichnet, daß der Polarisationsseparator (6) ein polarisierender Würfel ist.

3. Faseroptische Meßvorrichtung nach Anspruch 1, dadurch gekennzeichnet, daß der Polarisationsseparator (6) ein Wollaston-Prisma ist.

4. Faseroptische Meßvorrichtung nach Anspruch 1, dadurch gekennzeichnet, daß der Polarisationsseparator (6) ein Ganzfaser-Polarisationsseparator ist.

5. Faseroptische Meßvorrichtung nach einem der Ansprüche 1-4, dadurch gekennzeichnet, daß die Lichtquelle (1) eine superluminiszente Diode mit großem Spektrum ist.

6. Faseroptische Meßvorrichtung nach einem der Ansprüche 1-5, dadurch gekennzeichnet, daß der zweite Polarisationsseparator (5) ein Ganzfaserbauteil ist.

7. Faseroptische Meßvorrichtung nach einem der Ansprüche 1-6, dadurch gekennzeichnet, daß der Detektor (3) einen Teil des das Interferometer (2) verlassenden Lichtstromes über einen Eingang 5-d des zwischen der Quelle (1) und dem Polarisationsseparator (6) angeordneten Polarisationsseparators (5) empfängt.

8. Faseroptische Meßvorrichtung nach einem der Ansprüche 1-7, dadurch gekennzeichnet, daß sie einen Strahlenseparator (10) aufweist, der zwischen der Quelle (1) und dem Polarisationsseparator (5) angeordnet ist, wobei der Detektor (3) einen Teil des das Interferometer (2) verlassenden Stromes über einen Eingang 5-a dieses Separators (5) empfängt.

9. Faseroptische Meßvorrichtung nach einem der Ansprüche 1-8, dadurch gekennzeichnet, daß die Polarisationserhaltungs-Faser (7) eine Spannungsdoppelbrechungsfaser ist.

10. Faseroptische Meßvorrichtung nach einem der Ansprüche 1-9, dadurch gekennzeichnet, daß der Doppelbrechungsmodulator (4) ein integriertes optisches Element ist.

11. Gyrometer, dadurch gekennzeichnet, daß es der Vorrichtung nach einem der Ansprüche 1 bis 10 entspricht, wobei der gemessene Parameter die Drehgeschwindigkeit des Interferometers um die Achse der Spule ist.

## Claims

1. Fibre optic measuring device in which the variation in a measured parameter provides a phase difference between two waves, comprising:
- a light source (1) with small coherence length;
- a SAGNAC ring interferometer (2) in which two counter-propagating waves separated by a phase difference propagate;
- a detector (3);
- electronic means (8) comprising a processing system furnishing a signal which is a function of the measured parameter;
- means of modulating the phase difference separating the counter-propagating waves;
- a polarisation splitter (6) spatially splitting the two polarised waves which will propagate in the interferometer (2);
- the interferometer (2) comprising a polarisation conserving birefringent fibre (7) having two ends having neutral birefringence axes, each of the ends of the polarisation conserving fibre (7) being connected to one of the gates (6b) and (6c) of the polarisation splitter (6), the axes of each end coinciding with those of the associated gate so as to couple, at each end, the light in the same mode of polarisation from the birefringent fibre,
characterized in that it comprises a second polarisation splitter (5) between the source (1) and the optical polarisation splitting means (6) of the ring (7) of the interferometer (2), this second polarisation splitter (5) being oriented in such a way that the transmitted light originating from the source is distributed over the two modes of polarisation of the splitter (6), in that the said means of modulating the phase difference separating the counter-propagating waves are a birefringence modulator (4) placed between the source and the polarisation splitter (6); and in that it comprises a birefringent component placed ahead of the polarisation splitter (6) and introducing a path difference greater than the coherence length of the source (1) between the two polarised waves.

2. Fibre optic measuring device according to Claim 1, characterized in that the polarisation splitter (6) is a polarising cube.

3. Fibre optic measuring device according to Claim 1, characterized in that the polarisation splitter (6) is a Wollaston prism.

4. Fibre optic measuring device according to Claim 1, characterized in that the polarisation splitter (6) is an all-fibre polarisation splitter.

5. Fibre optic measuring device according to any one of Claims 1 to 4, characterized in that the light source (1) is a wide-spectrum superluminescent diode.

6. Fibre optic measuring device according to any one of Claims 1 to 5, characterized in that the second polarisation splitter (5) is an all-fibre component.

7. Fibre optic measuring device according to any one of Claims 1 to 6, characterized in that the detector (3) receives a part of the light flux exiting the interferometer (2), through a gate 5-d of the polarisation splitter (5) placed between the source (1) and the polarisation splitter (6).

8. Fibre optic measuring device according to any one of Claims 1 to 7, characterized in that it comprises a beam splitter (10) placed between the source (1) and the polarisation splitter (5), the detector (3) receiving a part of the flux exiting the interferometer (2), through the gate 5-a of this splitter (5).

9. Fibre optic measuring device according to any one of Claims 1 to 8, characterized in that the polarisation conserving fibre (7) is a stress birefringence fibre.

10. Fibre optic measuring device according to any one of Claims 1 to 9, characterized in that the birefringence modulator (4) is an integrated optical component.

11. Rate gyro characterized in that it conforms with the measuring device of any one of claims 1 to 10, the measured parameter being the speed of rotation of the interferometer around the axis of the coil.
